# FASCICULE DE BREVET EUROPEEN

(11) **EP 0 511 082 B1**
(45) Date de publication et mention de la délivrance du brevet: **13.10.1993**
(21) Numéro de dépôt: 92401123.2
(22) Date de dépôt: 21.04.1992
(51) Int. Cl.: H02K 24/00, H02K 29/12

(54) **Machine électrique tournante de détection de position angulaire absolue, du type sans balais**
Bürstenlose, elektrische, drehende Maschine zur Erfassung der absoluten Winkelstellung
Brushless type electrical turning machine for detecting the absolute angular position

(30) Priorité: 24.04.1991 FR 9105063
(43) Date de publication de la demande: 28.10.1992
(73) Titulaire: SOCIETE D'APPLICATIONS GENERALES D'ELECTRICITE ET DE MECANIQUE SAGEM, F-75783 Paris Cédex 16 (FR)
(72) Inventeur: Normand, Pascal, F-03190 Audes (FR)
(74) Mandataire: Gorree, Jean-Michel

(56) Documents cités:
- FR-A- 1 392 939
- FR-A- 2 624 669
- GB-A- 1 347 484
- SOVIET INVENTIONS ILLUSTRATED Section EI, Week 8943, 6 Décembre 1989 Derwent Publications Ltd., London, GB; Class V, AN 89-315431

## Description

La présente invention concerne des perfectionnements apportés aux machines électriques tournantes de détection de position angulaire absolue (dites : "resolver"), qui peuvent être du type transmetteur, détecteur ou différentiel, et elle concerne plus particulièrement celles de ces machines qui sont sans balais, étant alimentées électriquement par l'intermédiaire d'au moins un transformateur tournant, comportant un circuit magnétique et un bobinage rotoriques et un circuit magnétique et un bobinage statoriques de détecteur de position angulaire ainsi qu'un circuit magnétique et un bobinage rotoriques et un circuit magnétique et un bobinage statoriques de transformateur d'alimentation, les parties rotoriques du détecteur de position angulaire et du transformateur étant mécaniquement solidaires en rotation.

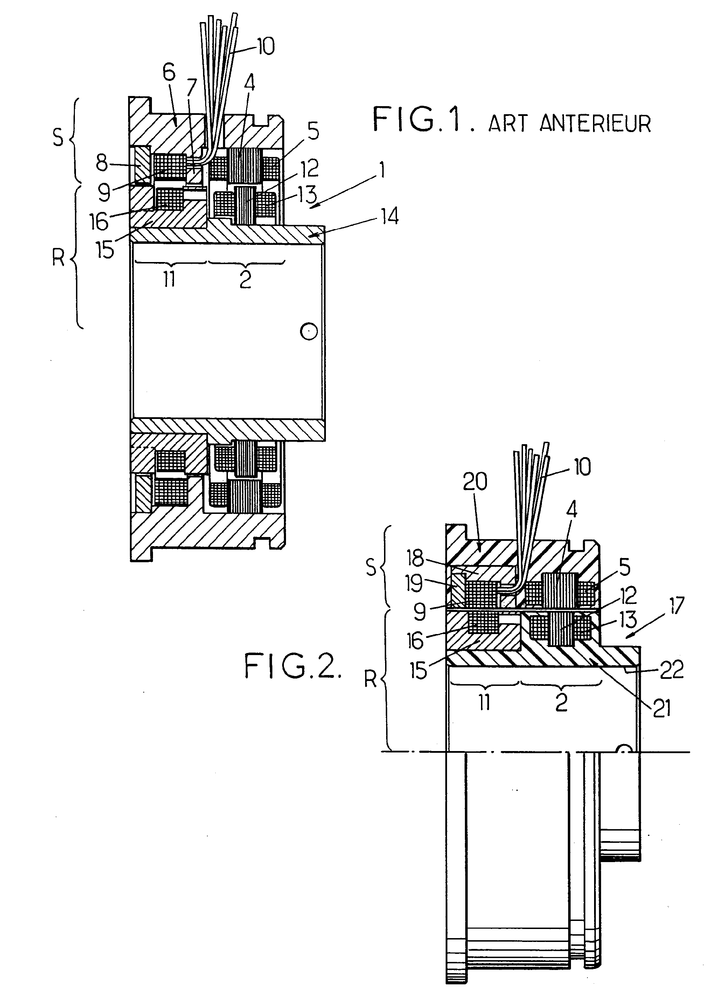

La figure 1 des dessins ci-annexés montre une machine tournante de ce type telle qu'actuellement fabriquée. La machine 1 comprend un détecteur de position absolue 2 et un transformateur tournant 11 pour l'alimentation électrique de celui-ci.

Dans le stator S, le détecteur de position absolue 2 comporte un circuit magnétique statorique 4 et un bobinage statorique 5 supportés à l'intérieur d'une fourrure statorique 6 en forme générale de manchon.

La fourrure statorique présente une cloison radiale 7 qui, en conjonction avec un flasque annulaire 8 rapporté axialement en bout de la fourrure, délimite un logement annulaire à section en U recevant l'enroulement primaire statorique 9 du transformateur 11, avec les fils de raccordement électrique 10.

Dans le rotor R, le détecteur de position angulaire 2 comporte un circuit magnétique rotorique 12 et un bobinage rotorique 13 supportés sur un moyeu rotorique 14, évidé centralement pour être emmanché sur un arbre (non représenté). Le transformateur 11 présente une bague annulaire 15, à section transversale en U, emmanchée à force sur le moyeu rotorique 14 et à l'intérieur de laquelle est installé l'enroulement secondaire rotorique 16 du transformateur qui est relié électriquement au bobinage rotorique 13 du détecteur.

Une machine tournante ainsi agencée de façon classique présente deux inconvénients essentiels.

Tout d'abord la fourrure statorique et le moyeu rotorique sont deux pièces métalliques usinées qui sont coûteuses, aussi bien en raison du matériau utilisé (métal) -qui en outre est traditionnement un métal magnétiquement noble, tel que Fe Ni- qu'en raison de l'usinage nécessaire à leur conformation, usinage qui en outre se révèle plus délicat à effectuer, et donc plus coûteux, sur le matériau magnétiquement noble utilisé. En outre, ces pièces, dont le rôle est essentiellement mécanique et qui n'interviennent pas dans la fonction électro-magnétique essentielle, sont lourdes.

Un autre inconvénient réside dans le fait que les bobinages rotorique et statorique du détecteur de position angulaire ne sont pas protégés mécaniquement (les enroulements du transformateur étant, quant à eux, mieux protégés, puisqu'abrités dans des logements annulaires en U). Or, ces machines tournantes sont livrées démontées aux utilisateurs, qui ont à charge de réunir rotor et stator lors de leur montage sur leurs supports respectifs. Etant donné l'absence de toute protection au voisinage des bobinages, ceux-ci peuvent trop facilement être endommagés lors de l'assemblage.

L'invention a donc essentiellement pour but de remédier aux inconvénients qui viennent d'être exposés et de proposer un agencement perfectionné de machine tournante du type précité qui soit plus légère, moins coûteuse et mieux protégée que les machines actuelles.

A ces fins, une machine tournante du genre considérée au préambule se caractérise essentiellement, étant agencée conformément à l'invention, en ce que
- les circuits magnétiques et les bobinages rotoriques respectivement du détecteur de position angulaire et du transformateur sont noyées dans un enrobement en un matériau électriquement isolant formant le corps de rotor surmoulé et le moyeu rotorique,
- les circuits magnétiques et les bobinages statoriques respectivement du détecteur de position angulaire et du transformateur sont noyés dans un enrobement en un matériau électriquement isolant formant le corps de stator surmoulé et la fourrure statorique.

Dans l'agencement conforme à l'invention, ce sont les enrobements isolants rotorique et statorique qui servent à maintenir les différents circuits magnéto-électriques et qui constituent les corps rotorique et statorique, en lieu et place du moyeu rotorique et de la fourrure statorique des machines antérieures. Non seulement le matériau isolant constituant ces enrobements est moins coûteux que les matériaux métalliques magnétiquement nobles utilisés jusqu'ici, mais il est également moins lourd que ceux-ci. En outre, le surmoulage peut être effectué par des processus connus, rapides et automatisés (par exemple par gravité ou sous pression), qui sont beaucoup moins coûteux que l'usinage jusqu'ici nécessaire des pièces métalliques. Le gain de prix obtenu par l'élimination des pièces métalliques précitées peut représenter une fraction notable du coût de la machine.

Par ailleurs, les bobinages, et en particulier les bobinages rotorique et statorique du détecteur de position angulaire, étant noyés dans le matériau d'enrobement, sont protégés contre les atteintes mécaniques accidentelles, par exemple lors de la réunion du rotor et du stator.

Il était certes déjà connu de fabriquer des moteurs électriques en prévoyant un enrobement isolant du rotor et/ou du stator. Toutefois, de tels enrobements étaient employés dans des moteurs électriques spéciaux, à grande vitesse de rotation et/ou à fort échauffement : les enrobements employés avaient respectivement un but mécanique (renforcement de la tenue mécanique des têtes ou chignons d'enroulements aux grandes vitesses de rotation) et/ou un but thermique (améliorer la répartition de la chaleur et éviter la formation de zones plus chaudes au sein du moteur). Il est à noter en outre que, dans de tels moteurs électriques, la mise en place de l'enrobement isolant ne s'accompagne d'aucune suppression de pièces métalliques préexistantes : au contraire, l'enrobement est surajouté aux pièces composantes et il en résulte un accroissement de matière et de travail de fabrication, et donc un accroissement du poids et du coût des moteurs ainsi traités.

La Demanderesse a en outre constaté qu'il était encore possible d'abaisser le coût d'une machine tournante conforme à l'invention en ayant recours, pour les pièces métalliques magnétiques du transformateur, à des matériaux peu nobles, notamment l'acier martinsitique ou ferritique (par exemple Z12 C13 ou Z6 CDF 18 02), en lieu et place des matériaux magnétiquement nobles (tels que Fe Ni) employés jusqu'à présent. Il est ainsi possible d'obtenir les caractéristiques de fonctionnement souhaitées pour la machine tout en réduisant le coût de la machine par l'emploi de matériaux moins coûteux et plus faciles à usiner.

L'invention sera mieux comprise à la lecture de la description détaillée qui suit d'un mode de réalisation préféré donné uniquement à titre d'exemple purement illustratif et représenté, en vue de côté avec demie coupe diamétrale, sur la figure 2 du dessin annexé.

Sur la figure 2, on a conservé les mêmes références alphanumériques pour désigner les pièces ou parties identiques à celles de la figure 1.

Dans la machine tournante 17 de l'invention représentée à la figure 2, les organes magnéto-électriques du détecteur de position angulaire 2 et du transformateur 11 sont constitués de façon identique à celles de la machine antérieure 1 de la figure 1, à ceci près que l'enroulement statorique 9 du transformateur est ici abrité dans un logement métallique à section transversale en U qui est obtenu à partir d'une bague annulaire 18 à section en L à laquelle est associée un flasque annulaire 19.

En outre, toutes les pièces métalliques appartenant au transformateur 11 (bagues statorique 18, 19 et rotorique 15) sont constituées en un matériau magnétique moins noble que ceux traditionnellement employés : on peut ainsi avoir recours à des aciers martinsitique ou ferritique, par exemple Z12 C13 ou Z6 CDF 18 02.

Pour le reste, les pièces magnéto-électriques sont noyés dans un matériau électriquement isolant. Ainsi, les pièces magnéto-électriques statoriques du détecteur 2 et du transformateur 11 sont noyées dans un enrobement isolant formant un corps statorique 20 isolant surmoulé, sur la face cylindrique interne duquel affleurent seules les circuits métalliques 4, 18 et 19 ; le bobinage 5 du détecteur est totalement enrobé et donc protégé mécaniquement. La forme extérieure du corps statorique 20 est agencé de toute façon souhaitée appropriée.

De la même manière, les pièces magnéto-électriques rotoriques du détecteur 2 et du transformateur 11 sont noyées dans un enrobement isolant formant un corps rotorique 21 isolant, sur la face cylindrique externe duquel affleurent seules les circuits métalliques 12 et 15 ; le bobinage 13 du détecteur est totalement enrobé et donc protégé mécaniquement. Le corps rotorique 21 présente un alésage axial 22 pour son montage sur un arbre tournant (non représenté).

On notera que les enroulements primaire statorique 9 et secondaire rotorique 16 n'ont pas besoin d'être impérativement noyés dans le matériau d'enrobement statorique et rotorique, respectivement, puisqu'ils sont disposés dans leurs logements annulaires en U respectifs où ils sont à la fois retenus et protégés mécaniquement.

Le matériau isolant utilisable pour constituer les corps rotorique et statorique peut être de n'importe quel type approprié à cet usage. La formation de ces enrobements peut être effectuée par tout processus approprié, par exemple par gravité ou sous pression selon les qualités recherchées.

Typiquement, l'enrobant utilisé dans un mode de réalisation d'une machine conforme à l'invention est défini par les caractéristiques suivantes :
- coefficient de dilatation linéaire ≦ 50 x 10⁻⁶
- classe de température : -55°C à + 130°C
- dureté (shore D) # 80 - 90
- rigidité diélectrique ≧ 15 kV/mm
- retrait < 0,2 %.

Le recours à la solution technique conforme à l'invention permet
- d'améliorer la fiabilité par une protection complète contre les chocs et contre un environnement agressif,
- de réduire le coût par la suppression des pièces usinées, cette diminution du coût étant d'autant plus sensible que la machine est de grande dimensions,
- de réduire le cycle de fabrication des machines,
- de réduire le poids des machines.

## Revendications

1. Machine électrique tournante de détection de position angulaire absolue, du type sans balais, alimentée électriquement par l'intermédiaire d'au moins un transformateur tournant (11), comportant un circuit magnétique (12) et un bobinage (13) rotoriques et un circuit magnétique (4) et un bobinage (5) statoriques de détecteur de position angulaire (2) ainsi qu'un circuit magnétique (15) et un bobinage (16) rotoriques et un circuit magnétique (18, 19) et un bobinage (9) statoriques de transformateur d'alimentation (11), les parties rotoriques du détecteur de position angulaire et du transformateur étant mécaniquement solidaires en rotation,
caractérisée en ce que
- les circuits magnétiques (12, 15) et les bobinages (13, 16) rotoriques respectivement du détecteur de position angulaire (2) et du transformateur (11) sont noyées dans un enrobement en un matériau électriquement isolant formant le corps de rotor surmoulé (21) et le moyeu rotorique,
- les circuits magnétiques (4, 18, 19) et les bobinages (5, 9) statoriques respectivement du détecteur de position angulaire (2) et du transformateur (11) sont noyés dans un enrobement en un matériau électriquement isolant formant le corps de stator surmoulé (20) et la fourrure statorique.

2. Machine électrique tournante selon la revendication 1, caractérisée en ce que les pièces métalliques magnétiques du transformateur sont réalisées en un matériau peu noble, notamment en acier martinsitique ou ferritique.

3. Machine électrique tournante selon la revendication 1 ou 2, caractérisée en ce que le circuit magnétique rotorique (15) du transformateur comprend une bague annulaire à section en U ouvert radialement vers l'extérieur incluse dans le matériau d'enrobement.

4. Machine électrique tournante selon l'une quelconque des revendications 1 à 3, caractérisée en ce que le circuit magnétique statorique du transformateur comprend une bague annulaire (18) à section en L ouvert radialement vers l'intérieur et axialement et en ce qu'un flasque annulaire (19) de blocage est rapporté axialement contre la bague en L pour former un circuit à section transversale en U.

## Patentansprüche

1. Bürstenlose, elektrische, drehende Maschine zur Erfassung der absoluten Winkelstellung, die durch Zwischenschaltung wenigstens eines sich drehenden Transformators (11) elektrisch versorgt wird, umfassend
einen magnetischen Kreis (12) und eine Spule (13), die zum Rotor gehören, und einen magnetischen Kreis (4) und eine Spule (5) des Detektors (2) für die Winkelstellung, die zum Stator gehören, und auch einen magnetischen Kreis (15) und eine Spule (16), die zum Rotor gehören, und einen magnetischen Kreis (18, 19) und eine Spule (9) des Transformators (11) zur Stromversorgung, die zum Stator gehören, wobei die zum Rotor gehörenden Abschnitte des Detektors für die Winkelstellung und die des Transformators mechanisch drehfest verbunden sind,
**dadurch gekennzeichnet,**
daß
- die magnetischen Kreise (12, 15) un die Spulen (13, 16), die jeweils zum Rotor gehören, des Detektors (2) für die Winkelstellung und des Transformators (11) in einer Umhüllung aus einem elektrisch isolierenden Material eingebettet sind, das den ausgegossenen Rotorkörper (21) und die Rotornabe bildet,
- die magnetischen Kreise (4, 18, 19) und die Spulen (5, 9), die jeweils zum Stator gehören, des Detektrors (2) für die Winkelstellung und des Transformators (11) in eine Umhüllung aus einem elektrisch isolierenden Material eingebettet sind, das den ausgegossenen Statorkörper (20) und den Statormantel bildet.

2. Elektrische, drehende Maschine nach Anspruch 1,
dadurch gekennzeichnet,
daß die magnetischen Metallteile des Transformators aus einem wenig edlen Material, insbesondere aus martensitischem oder ferritischem Stahl verwirklicht sind.

3. Elektrische, drehende Maschine nach dem Anspruch 1 oder 2,
dadurch gekennzeichnet,
daß der zum Rotor gehörende magnetische Kreis (15) des Transformators einen ringförmigen Ring umfaßt, der im Schnitt U-förmig ist und radial nach außen, im Umhüllungsmaterial eingeschlossen, offen ist.

4. Elektrische, drehende Maschine nach einem der Ansprüche 1 bis 3,
dadurch gekennzeichnet,
daß der zum Stator gehörende magnetische Kreis des Transformators einen ringförmigen Ring (18) umfaßt, der im Schnitt L-förmig ist und radial nach innen und axial offen ist, so daß eine ringförmige Wand (19) zum Sperren axial an die Wand im L anliegt, um einen Kreis mit U-förmigen Querschnitt zu bilden.

## Claims

1. A brushless type rotating electric machine for detecting an absolute angular position and electrically energised by at least one rotating transformer (11), comprising a magnetic circuit (12) and a rotor winding (13) and a magnetic circuit (4) and a stator winding (5) for the angular position detector (2), and a magnetic circuit (15) and a rotor winding (16) and a magnetic circuit (18, 19) and a stator winding (9) for the supply transformer (11), the rotating parts of the angular-position detector and of the transformer being mechanically secured in rotation, characterised in that the magnetic circuits (12, 15) and the rotor windings (13, 16) of the angular position detector (2) and the transformer (11) respectively are embedded in a casing of electrically insulating material forming the body of the moulded rotor (21) and the rotor hub, and
the magnetic circuits (4, 18, 19) and the stator windings (5, 9) of the angular position detector (2) and the transformer (11) respectively are embedded in a casing of electrically insulating material forming the body of the moulded stator (20) and the stator lining.

2. A rotating electric machine according to claim 1, characterised in that the magnetic metal components of the transformer are made of a base material, inter alia martensitic or ferritic steel.

3. A rotating electric machine according to claim 1 or 2, characterised in that the magnetic rotor circuit (15) of the transformer comprises an annular ring having a cross-section in the form of a U open radially towards the exterior and enclosed in the casing material.

4. A rotating electric machine according to any of claims 1 to 3, characterised in that the magnetic stator circuit of the transformer comprises an annular ring (18) having a cross-section in the form of an L radially open towards the interior and axially, and an annular locking plate (19) is axially attached to the L-shaped ring to form a circuit having a U cross-section.
